# EUROPÄISCHE PATENTSCHRIFT

(11) **EP 1 416 695 B1**
(45) Veröffentlichungstag und Bekanntmachung des Hinweises auf die Patenterteilung: **13.09.2006**
(21) Anmeldenummer: 02024267.3
(22) Anmeldetag: 31.10.2002
(51) Int. Cl.: H04L 29/06

(54) **Verfahren und Vorrichtung zur asynchronen Übertragung mindestens eines Meldesignals**
Method and apparatus for asynchronously transmitting at least a notification signal
Procédé et dispositif pour la transmission asynchrone d'au moins un signal de notification

(43) Veröffentlichungstag der Anmeldung: 06.05.2004
(73) Patentinhaber: SIEMENS AKTIENGESELLSCHAFT, 80333 München (DE)
(72) Erfinder: Fluck, Hans-Jürgen, 76149 Karlsruhe (DE); Gertsmaier, Alexej, 76287 Rheinstetten (DE); Glaser, Martin, 76698 Ubstadt-Weiher (DE)

(56) Entgegenhaltungen:
- WO-A-00/62136
- DE-A- 10 154 262

## Beschreibung

Die Erfindung betrifft ein Verfahren und eine Vorrichtung zur asynchronen Übertragung mindestens eines Meldesignals in einer Client-Server-Architektur, insbesondere innerhalb eines Leitsystems, welches mittels einer derartigen Architektur realisiert ist.

Aufgrund der vor allem in letzter Zeit immer weiter voranschreitenden Internettechnologie und aller damit zusammenhängenden Kommunikations- und Applikationslösungen ist auch bei leittechnischen Systemen zum Bedienen und Beobachten einer technischen Anlage der Trend zu erkennen, derartige Leitsysteme unter Einbeziehung von Methoden und Lösungen aus dem Bereich der Internettechnologie zu entwickeln.

Damit soll insbesondere erreicht werden, dass die Bedienstationen (Operator-Terminals) des Leitsystems weitgehend ortsunabhängig vom Standort der technischen Anlage werden. Ferner soll es nicht mehr notwendig sein, auf den Bedienstationen eine spezielle Bedien- und Beobachtungssoftware installieren zu müssen, um die technische Anlage steuern zu können. Ein Client-Rechner mit einem installierten Web-Browser soll dafür ausreichend sein.

Ein derartiges Leitsystem gestattet die Steuerung einer technischen Anlage aus der Ferne, wobei in vielen Fällen die Warte innerhalb der technischen Anlage nicht mehr oder nicht mehr ständig besetzt sein muss.

In vielen bekannten Leitsystemen werden Alarme innerhalb der technischen Anlage neben einer visuellen Darstellung, beispielsweise auf einem Bildschirm oder einer Großbildwand, oftmals auch akustisch gemeldet, beispielsweise mittels eines Signalhorns oder einer Hupe, welche zumindest beim Auftreten einer Alarmmeldung, welche eines schnellen Eingriffs bedarf, einen lauten Ton einer bestimmten Frequenz von sich geben, um in der technischen Anlage anwesendes Personal deutlich auf einen dringenden Handlungsbedarf hinzuweisen.

In einer unbemannten oder nur zeitweise besetzten Warte bleibt ein akustischer Alarm zwangsläufig oftmals unbemerkt.

Bei Leitsystemen, welche von der Internettechnologie Gebrauch machen, wird eine Verbindung von einer Bedienstation zu einem Server-Rechner des Leitsystems meist nur bedarfsweise aufgebaut, beispielsweise um eine Bedienhandlung vorzunehmen oder um sich vom aktuellen Betriebszustand der technischen Anlage zu überzeugen.

Meistens ist bei derartigen Leitsystemen eine asynchrone Übertragung von Meldungen vom Server-Rechner zu einem Client-Rechner (Bedienstation des Leitsystems) nicht realisiert.

Dies bedeutet, dass bei derartigen Leitsystemen im Wesentlichen nur solche Meldungen/Signale zu einer Bedienstation (Client-Rechner) übertragbar sind, welche zum Zeitpunkt einer bestehenden Verbindung zwischen der Bedienstation und dem Server-Rechner auf Seiten des Server-Rechners anstehen.

Aus WO-A-00/62136 sind ein Verfahren und ein System zum Überwachen und Steuern einer ferngesteuerten Einrichtung (remote equipment) bekannt, welche einen Zentralserver (central server) mit einer Datenbanksoftware (provider software database) aufweist. Die Datenbanksoftware ist für einen externen Benutzer über das Internet zugänglich, um die in der Datenbank hinterlegten Daten einzusehen. Die Datenbanksoftware verwendet Servlets als Interface zum Benutzer, um einen direkten Zugriff von diesem auf die Datenbanksoftware zu verhindern.

Der Benutzer kann daher an der Datenbanksoftware nur solche Änderungen von Parametern vornehmen, welche vom Servlet zugelassen werden. Die ferngesteuerten Einheiten sind über ein bidirektionales Kommunikationsnetzwerk mit dem Zentralserver und dessen Datenbanksoftware verbunden. Die Ferngesteuerten Einheiten übertragen über das Kommunikationsnetzwerk Daten von Überwachungseinrichtungen, damit diese von der Datenbanksoftware gespeichert und für die Servlets abrufbar hinterlegt werden. Jede der ferngesteuerten Einheiten ist mit definierten Grenzwerten programmiert. Wenn diese überschritten werden, wird der Systemprovider informiert, damit dieser den Benutzer über einen Pager, ein Mobiltelefon oder dergleichen informiert. Nachfolgend wählt sich der Benutzer dann auf dem Zentralserver ein, um die Daten in der Datenbanksoftware einzusehen. Dabei werden ihm überschrittene Grenzwerte in besonderer Weise graphisch dargestellt.

Der Erfindung liegt demgegenüber die Aufgabe zugrunde, ein Verfahren sowie eine Vorrichtung zur asynchronen Übertragung mindestens eines Meldesignals anzugeben, mittels welcher die Kommunikation zwischen einem Server-Rechner und einem Client-Rechner verbessert ist.

Bezüglich des Verfahrens wird die Aufgabe erfindungsgemäß gelöst durch ein Verfahren zur asynchronen Übertragung mindestens eines Meldesignals von einem Server-Rechner zu mindestens einem Client-Rechner, welches folgende Schritte umfasst:
1. Beim Auftreten des Meldesignals auf Seiten des Server-Rechners wird dem Meldesignal mindestens ein weiteres Meldesignal zugeordnet,
2. das weitere Meldesignal wird in mindestens eine Pipe, welche als ein Kommunikationsmittel vom Server-Rechner umfasst ist, geschrieben,
3. das weitere Meldesignal wird mittels der Pipe an mindestens ein Servlet, welches vom Server-Rechner umfasst ist, übermittelt, und
4. das weitere Meldesignal wird mittels des Servlet über einen Übertragungskanal an den Client-Rechner übertragen.

Die Erfindung geht dabei von der Überlegung aus, dass in einer Server-Client-Architektur eines Rechnersystems, insbesondere wenn als Übertragungskanal das Internet umfasst ist, eine asynchrone Übertragung von Meldungen/Signalen vom Server-Rechner zum Client-Rechner notwendig ist, um alle wichtigen Signale/Meldungen mittels des Client-Rechners schnell zu erkennen und sicher zu identifizieren.

Fehlt eine derartige Möglichkeit zur Datenübertragung, so können durch den Client-Rechner solche Signale und Meldungen nur schwer und vor allem nicht schnell erkannt werden, welche bereits vor einem Verbindungsaufbau zwischen Client- und Serverrechner auf Seiten des Server-Rechners angefallen sind.

Mittels des erfindungsgemäßen Verfahrens ist es nun vorgesehen, beim Auftreten des Meldesignals diesem ein weiteres Meldesignal zuzuordnen und in eine Pipe zu schreiben. Im weiteren wird dann nicht das Meldesignal direkt, sondern das weitere Meldesignal an den Client-Rechner übermittelt, so dass eine Entkopplung zwischen beiden genannten Signalen erreicht ist.

Insbesondere kann mittels des weiteren Meldesignals auch ein solches Meldesignal an den Client-Rechner übertragen werden, welches zum Zeitpunkt einer Verbindung zwischen dem Client-und dem Serverrechner auf Seiten des Server-Rechners gar nicht mehr ansteht.

Insofern sind das Meldesignal sowie das diesem zugeordnete weitere Meldesignal hinsichtlich ihres späteren Schicksals entkoppelt.

Bei einer Pipe handelt es sich um ein bekanntes Kommunikationsmittel, mittels welchem eine effiziente Kommunikation zwischen Prozessen, welche innerhalb desselben Rechners oder auf verschiedenen, mittels eines Netzwerks verbundenen, Rechnern ablaufen.

Des Weiteren muss sich eine Applikations-Softwareprogramm, welches sich einer Pipe zur Kommunikation bedient, nicht um Details des Verbindungsaufbaus zu einem entfernten Rechner kümmern, da die bekannte Pipe-Kommunikation eine übliche Client-Server-Architektur einschließt, wobei ein Prozess, welcher einen Pipe-Client generiert, auf einfache Weise mit einem Prozess kommunizieren kann, welcher einen Pipe-Server erzeugt.

Gemäß des erfindungsgemäßen Verfahrens wird das weitere Meldesignal mittels der Pipe an mindestens ein Servlet übermittelt. Die Pipe ist also das zur Kommunikation benutzte Mittel, um eine Verbindung zwischen einem Prozess, welcher das weitere Meldesignal erzeugt und einem weiteren Prozess, nämlich dem Servlet, herzustellen.

Bei dem Servlet handelt es sich um ein Software-Programm des Server-Rechners, mittels welchem zumindest ein Teil der Funktionalität des Server-Rechners realisiert ist.

Die Anwendung eines Servlets bietet unter anderem den Vorteil, dass es zwischen verschiedenen Anfragen an das Servlet speicherresident bleibt, so dass kein wiederholtes Laden und Starten des Servlets notwendig ist.

Weiterhin gibt es nur eine Instanz des Servlet, welche alle Anfragen gleichzeitig bearbeitet, was Speicherplatz einspart und es dem Servlet erlaubt, auf einfache Weise stetige Datenströme zu bearbeiten.

Schließlich sind Servlets üblicherweise realisiert als Softwaremodule, welche mittels der Programmiersprache Java erstellt sind und innerhalb eines Anwendungsprogramms in einem Server ablaufen (von daher kommt auch der Name "Servlet"). Servlets sind somit nicht an ein spezielles Client-Server-Protokoll gebunden und daher plattformunabhängig.

In einer vorteilhaften Ausgestaltung der Erfindung umfasst der Client-Rechner mindestens ein Kommunikations-Softwareprogramm, mittels welchem eine Verbindung zum Servlet aufgebaut wird und mittels welchem ein dem weiteren Meldesignal zugeordnetes Audioprogramm, welches vom Server-Rechner umfasst ist, auf dem Client-Rechner ausgeführt wird.

Bei dieser Ausgestaltung der Erfindung sind insbesondere Meldesignale, welche in der technischen Anlage ein akustisches Signal auslösen, asynchron mittels des weiteren Meldesignals an den Client-Rechner übertragbar, wobei eine akustische Signalisation auf Seiten des Client-Rechners stattfindet.

Das Kommunikations-Softwareprogramm nimmt Verbindung zum Servlet auf und wertet die ankommenden Daten derart aus, dass im Bedarfsfall auf Seiten des Clientrechners eine akustische Signalisierung stattfindet. Dabei wird auf dem Client-Rechner ein entsprechendes Audioprogramm abgespielt. Je nach Priorität und/oder Art eines empfangenen weiteren Meldesignals können mehrere Audioprogramme vorgesehen sein, so dass anhand des Klangbilds des jeweiligen Audioprogramms eine einfache und schnelle Klassifizierung des Meldesignals möglich ist.

Mittels dieser vorteilhaften Ausgestaltung des erfindungsgemäßen Verfahrens wird die im Stand der Technik übliche akustische Signalisierung innerhalb einer technischen Anlage übertragen auf eine Konfiguration des Leitsystems, bei welcher ein Bedienrechner (Client-Rechner) außerhalb der technischen Anlage angeordnet ist und die akustische Signalisierung auf diesem Rechner stattfindet.

In einer weiteren vorteilhaften Ausgestaltung wird eine Verbindung vom Client-Rechner zum Server-Rechner lediglich bedarfsweise aufgebaut.

Während des Betriebs einer technischen Anlage ist es meist nicht notwendig, eine ständige Verbindung zwischen einem zentralrechner des Leitsystems und den Bedienrechnern aufrechtzuerhalten, da nur zeitweise vom Bedienrechner aus Eingriff in die technische Anlage vorgenommen werden oder Informationen bezüglich des Betriebszustands der technischen Anlage benötigt werden.

Bei einer derartigen Architektur und Betriebsweise eines Leitsystems kommen die Vorteile eines erfindungsgemäßen Verfahrens zur asynchronen Datenübertragung besonders deutlich zum Tragen, da insbesondere sichergestellt ist, dass auch solche Meldesignale sicher und schnell zum Client-Rechner übertragen werden, welche bereits vor dem Verbindungsaufbau angefallen sind. Dadurch ist zumindest ein gravierender Nachteil bekannter Leitsysteme überwunden, bei welchen eine asynchrone Übertragung von Meldesignalen nicht vorgesehen ist.

Besonders vorteilhaft wird während einer Verbindung des Client-Rechners mit dem Server-Rechner bei einem ersten Zugriff des Client-Rechners auf den Server-Rechner ein vom Servlet umfasstes Kommunikationsprogramm gestartet und bei weiteren Zugriffen des Client-Rechners auf den Server-Rechner darauf überwacht, ob es gerade laufend ist.

Dadurch ist das Servlet ertüchtigt, alle anfallenden Meldesignale mittels der entsprechenden weiteren Meldesignale schnell an einen oder mehrere Client-Rechner zu übertragen, ohne dass zur Übertragung dieser Daten bei jedem Zugriff ein Hilfsprogramm geladen und gestartet werden muss. Beim Kommunikationsprogramm dieser Ausführungsform handelt es sich also um ein Softwareprogramm, mittels welchem die in der Pipe befindlichen Daten ausgelesen werden, wobei bei einem ersten Lesezugriff das Kommunikationsprogramm etabliert und während einer bestehenden Verbindung zwischen Client- und Server-Rechner aktiv gehalten wird. Probleme beim Auslesen von in der Pipe befindlichen Daten werden mittels der genannten Überwachung des Kommunikationsprogramms erkannt.

Vorteilhaft wird mittels des Kommunikationsprogramms eine Identifikationsinformation bezüglich der Pipe an das Servlet übermittelt.

Mittels derartiger, sogenannter "named pipes" ist eine besonders effiziente Kommunikation möglich, da die Verbindungsaufnahme zu einer gewünschten Pipe gezielt unter Verwendung deren Identifikationsinformation möglich ist. Diese Identifikationsinformation kann beispielsweise eine Bezeichnung (einen Namen) und/oder eine Software-Adresse der Pipe umfassen.

In einer besonders vorteilhaften Ausgestaltung der Erfindung umfasst der Übertragungskanal mindestens einen Teil des Internets und/oder ein Intranet.

Auf diese Weise ist eine Überwachung einer technischen Anlage über nahezu unbegrenzte Entfernungen möglich, solange zwischen dem Client- und der Server-Rechner eine Internet-Verbindung möglich ist.

Da bereits eine Vielzahl an Kommunikationsmechanismen im Zusammenhang mit der Internettechnologie etabliert ist, wird ein Leitsystems, welches von einer derartigen verteilten Architektur Gebrauch macht, zudem von Kommunikationsaufgaben entlastet, welche die Datenübertragung zwischen dem Server-und dem Client-Rechner betreffen. Darüber hinaus muss ein Client-Rechner bei einem Einsatz im Zusammenhang mit dieser Ausführungsform im Wesentlichen nur einen bekannten Web-Browser umfassen (thin client).Die eigentliche Funktionalität eines derartigen Leitsystems ist im Server-Rechner implementiert, welcher als ein Web-Server betrieben wird. Ein gängiges, bei dieser Ausführungsform verwendbares Übertragungsprotokoll ist das http-Protokoll, welches von gängigen Web-Browsern standardmäßig verarbeitbar ist.

Bezüglich der Vorrichtung wird die Aufgabe gelöst gemäß den Merkmalen des entsprechenden unabhängigen Vorrichtungsanspruchs.

Vorteilhafte Ausgestaltungen einer erfindungsgemäßen Vorrichtung sind den entsprechenden, auf die Vorrichtung rückbezogenen, Unteransprüchen zu entnehmen.

Da der unabhängige Vorrichtungsanspruch sowie die davon abhängigen Unteransprüche im Wesentlichen gegenständlichen Ausprägungen bereits dargestellter Verfahrensansprüche entsprechen, wird an dieser Stelle auf eine Wiederholung verzichtet und auf die im Zusammenhang mit dem erfindungsgemäßen Verfahren und diesen Ausführungsformen gemachten Angaben und Erläuterungen verwiesen.

Im folgenden wird ein Ausführungsbeispiel der Erfindung näher dargestellt.
Es zeigt:
- FIG: eine erfindungsgemäße Vorrichtung unter Einbeziehung des Internets.

Eine erfindungsgemäße Vorrichtung 1 umfasst als wesentliche Bestandteile einen Server-Rechner 10, einen durch das Internet realisierten Übertragungskanal 17 sowie eine Anzahl an Client-Rechnern 15.

Die Abwicklung der Kommunikation zwischen dem Server-Rechner 10 und dem Client-Rechner 15 gesteht dabei bevorzugt mittels bekannter Kommunikationsmechanismen wie des http-Protokolls. Zur Anbindung der Client-Rechner 15 an den Übertragungskanal 17 umfassen die Client-Rechner 15 jeweils einen bekannten Web-Browser 60.

Der Server-Rechner 10 umfasst die Funktionalität eines bekannten Web-Servers.

Vom Server-Rechner 10 werden eine Anzahl an Server-Tasks 20 bearbeitet, welche ein oder mehrere Meldesignale 25 umfassen können, die an mindestens einen Client-Rechner 15 zu übertragen sind.

Derartige Meldesignale 25 können beispielsweise Alarmmeldungen umfassen, welche beim Betrieb einer technischen Anlage anfallen.

Zur Übertragung der genannten Meldesignale 25 wird dabei mindestens einem Meldesignal 25 mindestens ein weiteres Meldesignal 27,28,29 zugeordnet, welches in mindestens eine Pipe 35,37,39 geschrieben wird.

Mindestens einem weiteren Meldesignal 27,28,29 ist mindestens ein Audioprogramm 62 zugeordnet, dessen Klanginhalt charakteristisch für das entsprechende weitere Meldesignal ist.

Der Server-Rechner 10 umfasst weiterhin einen Servlet-Container 30, welcher mindestens ein Servlet 40 umfasst.

Die weiteren Meldesignale 27,28,29 werden mittels der Pipe 35,37,39 an das Servlet 40 übermittelt und über den Übertragungskanal 17 an mindestens einen Client-Rechner 15 übertragen.

Das Servlet 40 umfasst ein Kommunikationsprogramm 70, welches während einer Verbindung zwischen mindestens einem Client-Rechner 15 und der Server-Rechner 10 bei einem ersten Zugriff des Client-Rechners gestartet und bei weiteren zugriffen darauf hin überwacht wird, ob es aktiv ist.
Deshalb ist es nicht notwendig, während einer Verbindung bei jedem Zugriff eines Client-Rechners 15 ein Hilfsprogramm zu laden und zu starten. Vielmehr bleibt während der Verbindung das Kommunikationsprogramm 70 aktiv und wird während der Verbindung laufend auf seine Aktivität überwacht, was eine schnelle Fehlererkennung möglich macht.

Ein oder mehrere Client-Rechner 15 verfügen über eine Klangwidergabeeinrichtung 64, welche beispielsweise eine handelsübliche Soundkarte sowie einen Lautsprecher umfasst. Dadurch können solche Meldesignale 25, bei welchen eine akustische Signalisierung gewünscht ist, auf dem Client-Rechner 15 akustisch dargestellt werden.

Die Verbindung von einem der Client-Rechner 15 über den Übertragungskanal 17 zum Server-Rechner 10 wird auf Seiten des Client-Rechners 15 mittels eines Kommunikations-Softwareprogramms 50 hergestellt, wobei mittels des Kommunikations-Softwareprogramms 50 das Servlet 40 kontaktiert. Über das Kommunikations-Softwareprogramm 50 sind bevorzugt auch die Audioprogramme 62 des Server-Rechners 10 auf dem Client-Rechner 15 ausführbar; das Kommunikations-Softwareprogramm 50 kann dabei vom Web-Browser umfasst sein und bekannte, weit verbreitete Internet-Kommunikationsmechanismen beinhalten.

Es lässt sich feststellen, dass mittels einer erfindungsgemäßen Vorrichtung eine asynchrone Übertragung von Meldesignalen möglich ist, was besonders vorteilhaft bei einer akustischen Fernalamierung über das Internet zum Tragen kommt.

Zusammengefasst lässt sich die Erfindung folgendermaßen umreißen: In einer Client-Server-Rechnerarchitektur wird vorgeschlagen, einem auf Seiten eines Server-Rechners (10) auftretenden Meldesignal (25) ein weiteres Meldesignal (27,28,29) zuzuordnen, in eine Pipe (35,37,39) zu schreiben und mittels der Pipe an ein Servlet (40) des Server-Rechners (10) zu übermitteln. Das weitere Meldesignal (27,28,29) wird dann mittels des Servlets (40) über einen Übertragungskanal (17) an einen Client-Rechner (15) übertragen.

Ein Vorteil des erfindungsgemäßen Verfahrens bzw. der Vorrichtung besteht in der Entkopplung des Meldesignals vom entsprechenden weiteren Meldesignal, wobei das Schicksal des Meldesignals (25) nach dessen Auftreten das Schicksal des zugeordneten Meldesignals (27,28,29) nicht mehr unmittelbar beeinflusst.

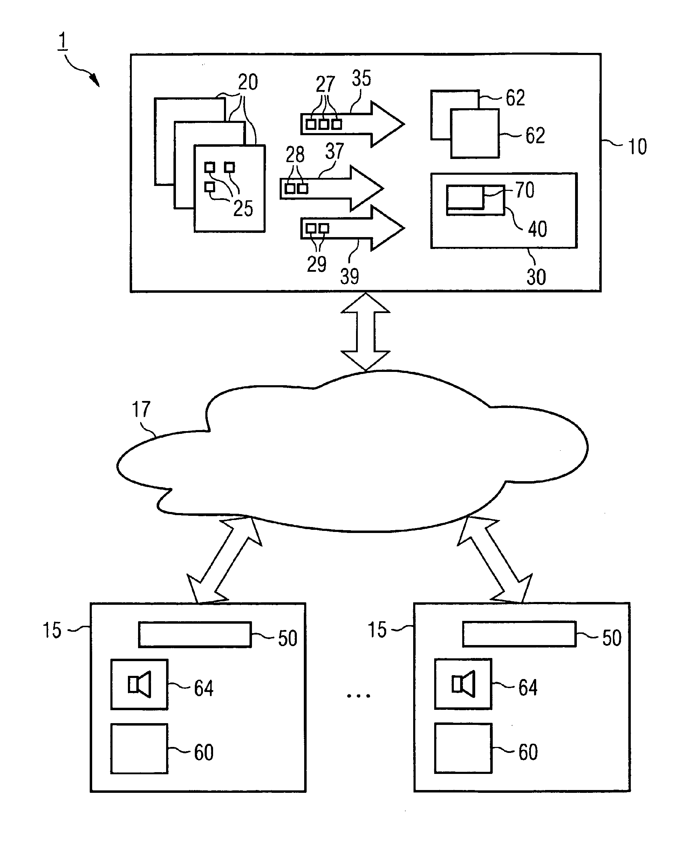

## Patentansprüche

1. Verfahren zur asynchronen Übertragung mindestens eines Meldesignals (25) von einem Server-Rechner (10) zu mindestens einem Client-Rechner (15), wobei dieses Verfahren folgende Schritte aufweist:
a) beim Auftreten des Meldesignals (25) auf Seiten des Server-Rechners (10) wird dem Meldesignal mindestens ein weiteres Meldesignal (27,28,29) zugeordnet,
b) das weitere Meldesignal (27,28,29) wird in mindestens eine Pipe (35,37,39), welche als ein Kommunikationsmittel vom Server-Rechner (10) umfasst ist, geschrieben,
c) das weitere Meldesignal (27,28,29) wird mittels der Pipe (35,37,39) an mindestens ein Servlet (40), welches vom Server-Rechner (10) umfasst ist, übermittelt, und
d) das weitere Meldesignal (27,28,29) wird mittels des Servlets (40) über einen Übertragungskanal (17) an den Client-Rechner (15) übertragen.

2. Verfahren nach Anspruch 1,
**dadurch gekennzeichnet, dass** der
Client-Rechner (15) mindestens ein Kommunikations-Softwareprogramm (50) umfasst, mittels welchem eine Verbindung zum Servlet (40) aufgebaut wird und mittels welchem ein dem weiteren Meldesignal (27,28,29) zugeordnetes Audioprogramm (62), welches vom Server-Rechner (10) umfasst ist, auf dem Client-Rechner (15) ausgeführt wird.

3. Verfahren nach Anspruch 1 oder 2,
**dadurch gekennzeichnet, dass** eine Verbindung vom Client-Rechner (15) zum Server-Rechner (10) lediglich bedarfsweise aufgebaut wird.

4. Verfahren nach einem der Ansprüche 1 bis 3,
**dadurch gekennzeichnet, dass** während einer Verbindung des Client-Rechners (15) mit dem Server-Rechner (10) bei einem ersten Zugriff des Client-Rechners
(15) auf den Server-Rechner (10) ein vom Servlet (40) umfasstes Kommunikationsprogramm (70) gestartet und bei weiteren Zugriffen des Client-Rechners (15) auf den Server-Rechner (10) daraufhin überwacht wird, ob es gerade laufend ist.

5. Verfahren nach Anspruch 4,
**dadurch gekennzeichnet, dass** mittels des Kommunikationsprogramms (70) eine Identifikationsinformation bezüglich der Pipe (27,28,29) an das Servlet (40) übermittelt wird.

6. Verfahren nach Anspruch 5,
**dadurch gekennzeichnet, dass** die Identifikationsinformation eine Bezeichnung und/oder eine Software-Adresse der Pipe (27,28,29) umfasst.

7. Verfahren nach einem der Ansprüche 1 bis 6,
**dadurch gekennzeichnet, dass** der Übertragungskanal (17) mindestens einen Teil des Internets und/oder ein Intranet umfasst.

8. Vorrichtung (1) zur asynchronen Übertragung mindestens eines Meldesignals (25), wobei diese vorrichtung folgende Komponenten aufweist :
■ ein Server-Rechner (10), umfassend mindestens eine Pipe (25,37,39) als ein Kommunikationsmittel, welcher ertüchtigt ist, beim Auftreten des Meldesignals (25) diesem ein weiteres Meldesignal (27,28,29) zuzuordnen und das weitere Meldesignal (27,28,29) in die Pipe (35,37,39) zu schreiben,
■ mindestens ein vom Server-Rechner (10) umfasstes Servlet (40), an welches das weitere Meldesignal (27,28,29) mittels der Pipe (35,37,39) übermittelbar ist
■ einen Übertragungskanal (17), und
■ mindestens einen Client-Rechner (15) an welchen das weitere Meldesignal (27,28,29) mittels des Servlet (40) vom Server-Rechner (10) übertragbar ist.

9. Vorrichtung (1) nach Anspruch 8,
**dadurch gekennzeichnet, dass** der Client-Rechner (15) ein Kommunikations-Softwareprogramm (50) umfasst, mittels welchem eine Verbindung zum Servlet (40) herstellbar ist und mittels welchem ein dem weiteren Meldesignal zugeordnetes, vom Server-Rechner (10) umfasstes, Audioprogramm (62) auf dem Client-Rechner (15) ausführbar ist.

10. Vorrichtung (1) nach Anspruch 8 oder 9,
**dadurch gekennzeichnet, dass** der Servlet (40) ein Kommunikationsprogramm (70) umfasst, welches bei einem ersten Zugriff des Client-Rechners (15) auf dem Server-Rechner (10) ausführbar und bei weiteren Zugriffen des Client-Rechners (15) auf den Server-Rechner (10) daraufhin überprüfbar ist, ob es gerade laufend ist.

11. Vorrichtung (1) nach Anspruch 10,
**dadurch gekennzeichnet, dass** mittels des Kommunikationsprogramms (70) eine Identifikationsinformation bezüglich der Pipe (27,28,29) an das Servlet (40) übermittelbar ist.

12. Vorrichtung (1) nach Anspruch 11,
**dadurch gekennzeichnet, dass** die Identifikationsinformation eine Bezeichnung und/oder eine Software-Adresse der Pipe (27,28,29) umfasst.

13. Vorrichtung (1) nach einem der Ansprüche 8 bis 12,
**dadurch gekennzeichnet, dass** der Übertragungskanal (17) mindestens einen Teil des Internets und/oder ein Intranet umfasst.

## Claims

1. Method for asynchronously transferring at least one message signal (25) from a server computer (10) to at least one client computer (15), this method having the following steps:
a) when the message signal (25) appears on the server computer (10), the message signal is assigned at least one further message signal (27, 28, 29),
b) the further message signal (27, 28, 29) is written to at least one pipe (35, 37, 39) which the server computer (10) comprises as a communication means,
c) the further message signal (27, 28, 29) is transmitted by means of the pipe (35, 37, 39) to at least one servlet (40) which the server computer (10) comprises, and
d) the further message signal (27, 28, 29) is transferred by means of the servlet (40) to the client computer (15) via a transfer channel (17).

2. Method according to Claim 1,
**characterized in that** the client computer (15) comprises at least one communication software program (50) which is used to set up a connection to the servlet (40) and which is used to execute an audio program (62), which the server computer (10) comprises and which is associated with the further message signal (27, 28, 29), on the client computer (15).

3. Method according to Claim 1 or 2,
**characterized in that** a connection from the client computer (15) to the server computer (10) is set up only when needed.

4. Method according to one of Claims 1 to 3,
**characterized in that** while the client computer (15) is connected to the server computer (10), a first access operation by the client computer (15) to the server computer (10) prompts a communication program (70) which the servlet (40) comprises to start, and further access operations by the client computer (15) to the server computer (10) prompt monitoring of whether said communication program is currently running.

5. Method according to Claim 4,
**characterized in that** the communication program (70) is used to transmit an identification information item for the pipe (27, 28, 29) to the servlet (40).

6. Method according to Claim 5,
**characterized in that** the identification information item comprises a descriptor and/or a software address for the pipe (27, 28, 29).

7. Method according to one of Claims 1 to 6,
**characterized in that** the transfer channel (17) comprises at least part of the Internet and/or an intranet.

8. Apparatus (1) for asynchronously transferring at least one message signal (25), this apparatus having the following components:
• a server computer (10), comprising at least one pipe (25, 37, 39) as a communication means, which is capable of assigning the message signal (25), when it appears, a further message signal (27, 28, 29) and of writing the further message signal (27, 28, 29) to the pipe (35, 37, 39),
• at least one servlet (40) which the server computer (10) comprises and to which the further message signal (27, 28, 29) can be transmitted by means of the pipe (35, 37, 39),
• a transfer channel (17), and
• at least one client computer (15) to which the further message signal (27, 28, 29) can be transferred by the server computer (10) using the servlet (40).

9. Apparatus (1) according to Claim 8,
**characterized in that** the client computer (15) comprises a communication software program (50) which can be used to set up a connection to the servlet (40) and which can be used to execute an audio program (62), which the server computer (10) comprises and which is associated with the further message signal, on the client computer (15).

10. Apparatus (1) according to Claim 8 or 9,
**characterized in that** the servlet (40) comprises a communication program (70) which can be executed upon a first access operation by the client computer (15) on the server computer (10) and can be checked upon further access operations by the client computer (15) to the server computer (10) in order to determine whether it is currently running.

11. Apparatus (1) according to Claim 10,
**characterized in that** the communication program (70) can be used to transmit an identification information item for the pipe (27, 28, 29) to the servlet (40).

12. Apparatus (1) according to Claim 11,
**characterized in that** the identification information item comprises a descriptor and/or a software address for the pipe (27, 28, 29).

13. Apparatus (1) according to one of Claims 8 to 12,
**characterized in that** the transfer channel (17) comprises at least part of the Internet and/or an intranet.

## Revendications

1. Procédé pour la transmission asynchrone d'au moins un signal d'avertissement (25) par un ordinateur serveur (10) à au moins un ordinateur client (15), ce procédé comportant les étapes suivantes :
a) à l'arrivée du signal d'avertissement (25) du côté de l'ordinateur serveur (10), au moins un autre signal d'avertissement (27, 28, 29) est associé au signal d'avertissement,
b) l'autre signal d'avertissement (27, 28, 29) est écrit dans au moins un canal (35, 37, 39) qui est compris comme moyen de communication par l'ordinateur serveur (10),
c) l'autre signal d'avertissement (27, 28, 29) est transmis au moyen du canal (35, 37, 39) à au moins un servlet (40) qui est compris par l'ordinateur serveur (10), et
d) l'autre signal d'avertissement (27, 28, 29) est transmis au moyen du servlet (40) via un canal de transmission (17) à l'ordinateur client (15).

2. Procédé selon la revendication 1,
**caractérisé par le fait que** l'ordinateur client (15) comprend au moins un programme logiciel de communication (50) au moyen duquel une liaison est établie vers le servlet (40) et au moyen duquel un programme audio (62) qui est associé à l'autre signal d'avertissement (27, 28, 29) et qui est compris par l'ordinateur serveur (10) est exécuté sur l'ordinateur client (15).

3. Procédé selon la revendication 1 ou 2,
**caractérisé par le fait qu'**une liaison de l'ordinateur client (15) à l'ordinateur serveur (10) est établie simplement lorsque c'est nécessaire.

4. Procédé selon l'une des revendications 1 à 3,
**caractérisé par le fait que**, pendant une liaison de l'ordinateur client (15) à l'ordinateur serveur (10), lors d'un premier accès de l'ordinateur client (15) à l'ordinateur serveur (10), un programme de communication (70) compris par le servlet (40) est démarré et, lors des accès suivants de l'ordinateur client (15) à l'ordinateur serveur (10), on vérifie s'il est justement en cours d'exécution.

5. Procédé selon la revendication 4,
**caractérisé par le fait que**, au moyen du programme de communication (70), une information d'identification concernant le canal (35, 37, 39) est transmise au servlet (40).

6. Procédé selon la revendication 5,
**caractérisé par le fait que** l'information d'identification comprend un nom et/ou une adresse logicielle du canal (35, 37, 39).

7. Procédé selon l'une des revendications 1 à 6,
**caractérisé par le fait que** le canal de transmission (17) comprend au moins une partie d'Internet et/ou un Intranet.

8. Dispositif (1) pour la transmission asynchrone d'au moins un signal d'avertissement (25), ce dispositif comportant les éléments suivants :
• un ordinateur serveur (10), qui comprend au moins un canal (35, 37, 39) comme moyen de communication et qui est capable, à l'arrivée du signal d'avertissement (25), d'associer à celui-ci un autre signal d'avertissement (27, 28, 29) et d'écrire l'autre signal d'avertissement (27, 28, 29) dans le canal (35, 37, 39),
• au moins un servlet (40) qui est compris par l'ordinateur serveur (10) et auquel l'autre signal d'avertissement (27, 28, 29) peut être transmis au moyen du canal (35, 37, 39),
• un canal de transmission (17), et
• au moins un ordinateur client (15) auquel l'autre signal d'avertissement (27, 28, 29) peut être transmis par l'ordinateur serveur (10) au moyen du servlet (40).

9. Dispositif (1) selon la revendication 8,
**caractérisé par le fait que** l'ordinateur client (15) comprend un programme logiciel de communication (50) au moyen duquel une liaison peut être établie vers le servlet (40) et au moyen duquel un programme audio (62) qui est associé à l'autre signal d'avertissement et qui est compris par l'ordinateur serveur (10) peut être exécuté sur l'ordinateur client (15).

10. Dispositif (1) selon la revendication 8 ou 9,
**caractérisé par le fait que** le servlet (40) comprend un programme de communication (70) qui peut être exécuté lors d'un premier accès de l'ordinateur client (15) à l'ordinateur serveur (10) et dont on peut vérifier s'il est justement en cours d'exécution lors des accès suivants de l'ordinateur client (15) à l'ordinateur serveur (10).

11. Dispositif (1) selon la revendication 10,
**caractérisé par le fait que**, au moyen du programme de communication (70), une information d'identification concernant le canal (35, 37, 39) peut être transmise au servlet (40).

12. Dispositif (1) selon la revendication 11,
**caractérisé par le fait que** l'information d'identification comprend un nom et/ou une adresse logicielle du canal(35, 37, 39).

13. Dispositif (1) selon l'une des revendications 8 à 12,
**caractérisé par le fait que** le canal de transmission (17) comprend au moins une partie d'Internet et/ou un Intranet.
